# EUROPÄISCHE PATENTANMELDUNG

(11) **EP 2 495 119 A2**
(43) Veröffentlichungstag der Anmeldung: **05.09.2012**
(21) Anmeldenummer: 12001456.8
(22) Anmeldetag: 03.03.2012
(51) Int. Cl.: B60J 10/00, B60J 10/08, B60R 13/08, B60R 21/34

(54) **Dichtungsanordnung für einen gekapselten Motorraum eines Fahrzeugs**

(30) Priorität: 04.03.2011 DE 102011013024
(71) Anmelder: Audi AG, 85049 Ingolstadt (DE)
(72) Erfinder: Kopp, Andreas, 85092 Kösching (DE)
(74) Vertreter: Patzelt, Heike Anna Maria

(57) **Zusammenfassung**

Dichtungsanordnung 1 für einen gekapselten Motorraum 2 eines Fahrzeugs 3, aufweisend eine zwischen einer Geschlossenstellung und einer Offenstellung verschwenkbare Motorhaube 4 mit einer unterseitig montierten Dichtungsanordnung 1 zur dichtenden Auflage auf mindestens einer Kapselwandung 5, wobei die Dichtungsanordnung 1 zweiteilig mit einem zangenförmigen Dichtungsband 6 und einem Hohlprofil 7 ausgebildet ist und wobei das zangenförmige Dichtungsband 6 das Hohlprofil 7 in der Geschlossenstellung zumindest teilweise umklammert.

## Beschreibung

Dichtungsanordnung für einen gekapselten Motorraum eines Fahrzeugs, aufweisend eine zwischen einer Geschlossenstellung und einer Offenstellung verschwenkbare Motorhaube mit einer unterseitig montierten Dichtungsanordnung zur dichtenden Auflage auf mindestens einer Kapselwandung.

Derartige gekapselte Motorräume werden im Fahrzeugbau zur Reduzierung des Auskühlens des Motorraums in Folge des "Kamineffekts" verwendet. Dabei wird verhindert, dass die aufsteigende wärmere Luft den Motorraum verlassen kann und so kühlere Luft von unten angesaugt wird. Das resultierende Warmluftpolster sorgt für ein schnelleres Erreichen der Betriebstemperatur des Motors auch nach längeren Standzeiten.

Die gattungsbildende DE 26 20 774 A1 offenbart dazu ein Kraftfahrzeug mit einer schalldämmenden Verkleidung des Motors, wobei die Verkleidung aus zum Teil von Karosseriebauteilen gebildeten Seitenwänden, Stirnwänden und einer Motorhaube gebildet wird. Die Motorhaube liegt dazu auf den Seiten- und Stirnwänden unter Zwischenschaltung einer umlaufenden Dichtung auf.

Nachteilig ist, dass das Aufliegen der Motorhaube auf den Seiten- und Stirnwänden, trotz der zwischengeschalteten schmalen Dichtung, den möglichen Deformationsweg bei einem Aufprall eines Fußgängers auf die Motorhaube stark reduziert und so ein höheres Verletzungsrisiko besteht.

Aufgabe der vorliegenden Erfindung ist es daher eine Dichtungsanordnung für einen gekapselten Motorraum eines Fahrzeugs bereitzustellen, die ausreichende Dichtigkeit mit guten Deformationseigenschaften verbindet.

Diese Aufgabe wird durch die Merkmale des Patentanspruchs 1 bzw. 6 gelöst.

Eine Dichtungsanordnung für einen gekapselten Motorraum eines Fahrzeugs weist eine zwischen einer Geschlossenstellung und einer Offenstellung verschwenkbare Motorhaube mit einer unterseitig montierten Dichtungsanordnung zur dichtenden Auflage auf mindestens einer Kapselwandung auf, wobei die Dichtungsanordnung zweiteilig mit einem zangenförmigen Dichtungsband und einem Hohlprofil ausgebildet ist und wobei das zangenförmige Dichtungsband das Hohlprofil in der Geschlossenstellung zumindest teilweise umklammert.

Indem das zangenförmige Dichtungsband das Hohlprofil zumindest teilweise umklammert, entsteht eine Dichtungsanordnung mit guten Deformationseigenschaften aufgrund der mindestens zwei übereinanderliegenden Hohlräume. Dadurch kann der Abstand zwischen Motorhaube und Kapselwandung vergrößert werden, was Vorteile bei einem Fußgängeraufprall bietet. Gleichzeitig ist weiterhin eine ausreichende Dichtigkeit des gekapselten Motorraums bei uneingeschränkter Verschwenkbarkeit der Motorhaube zwischen Offenstellung und Geschlossenstellung gegeben. Als Kapselwandung können sowohl Karosseriebauteile, als auch gesondert eingebrachte Isolationswände, verwendet werden. Die Dichtungsanordnung besteht vorzugsweise aus einer weichen, gasdichten Gummimischung.

In einer bevorzugten Ausführung ist die Dichtungsanordnung umlaufend angeordnet. Eine umlaufende Dichtungsanordnung bietet eine besonders gute Dichtigkeit der Kapselung.

In einer bevorzugten Ausführung ist die Dichtungsanordnung stoffschlüssig befestigt. Die stoffschlüssige Befestigung erlaubt eine einfache und schnelle Montage der Dichtungsanordnung, wobei das zangenförmige Dichtungsband bevorzugt an der Motorhaube und das Hohlprofil auf der Kapselwandung befestigt ist.

In einer bevorzugten Ausführung umschließt die Kapselwandung eine Brennkraftmaschine kastenförmig. Die Kapselwandung verhindert ein seitliches Entweichen warmer Luft aus dem Motorraum. Je tiefer diese gezogen ist und je mehr wärmeführende Bauteile darin enthalten sind, desto effizienter funktioniert diese. In die Kapselwandung können Teile der Karosserie, wie beispielsweise ein Wasserkasten oder eine Kühlermaske einbezogen werden. Die Kapselwandung wird nach oben hin von der Motorhaube in Geschlossenstellung begrenzt.

Weitere Einzelheiten und Merkmale der Erfindung ergeben sich aus der nachstehenden Beschreibung eines bevorzugten Ausführungsbeispiels unter Bezugnahme auf die Zeichnungen.

Darin zeigen:
- Fig. 1: zwei Schnittansichten der Dichtungsanordnung;
- Fig. 2: eine Schnittansicht eines Fahrzeugs mit Dichtungsanordnung.

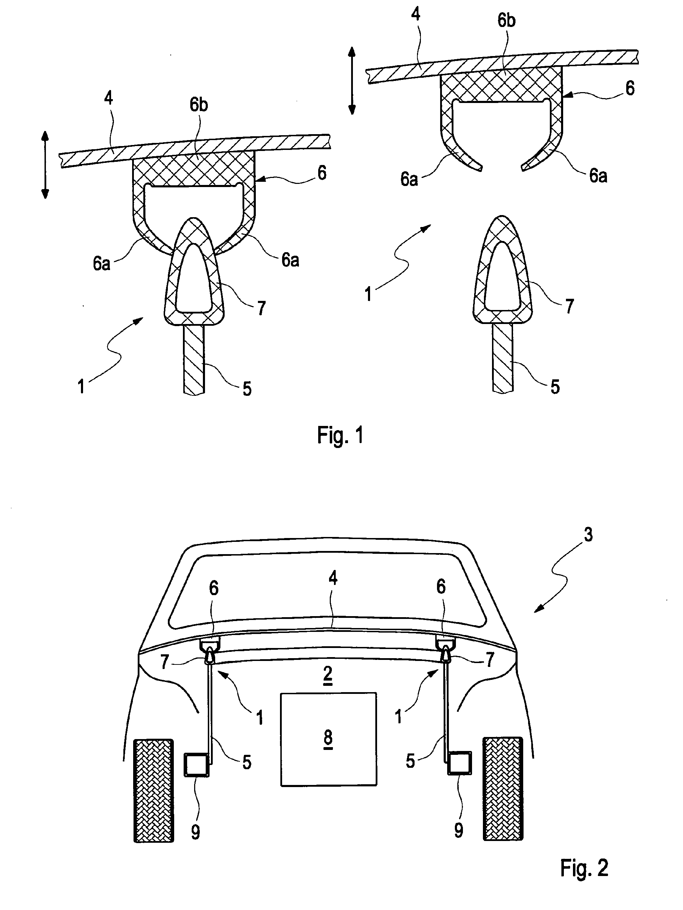

Gemäß Fig. 1 hat eine Dichtungsanordnung 1 für einen gekapselten Motorraum eines Fahrzeugs ein zangenförmiges Dichtungsband 6, bestehend aus einer auf der Unterseite einer Motorhaube 4 montierten Basis 6b und daran angeformten, zangenförmig abstehenden Schenkeln 6a. Auf einer Kapselwandung 5 ist ein zapfenförmiges Hohlprofil 7 montiert. In der linken Darstellung befindet sich die Motorhaube 4 in der Geschlossenstellung, wobei die Schenkel 6a des zangenförmigen Dichtungsbands 6 das Hohlprofil 7 teilweise dichtend umgreifen. In der rechten Darstellung ist die Motorhaube 4 hingegen etwas in Richtung Offenstellung angehoben, wodurch sich das zangenförmige Dichtungsband 6 und das Hohlprofil 7 voneinander ablösen.

In Fig. 2 ist die Einbausituation einer Dichtungsanordnung 1 gemäß Fig. 1 in einem Fahrzeug 3 dargestellt. Das Fahrzeug 3 weist einen Motorraum 2 zur Unterbringung einer Brennkraftmaschine 8 auf. Eine Kapselwandung 5 umschließt die Brennkraftmaschine 8 kastenförmig und stützt sich dabei auf zwei beidseitig der Brennkraftmaschine 8 angeordneten Längsträgern 9 ab. Der Motorraum 2 wird nach oben hin von einer Motorhaube 4 in Geschlossenstellung begrenzt. Auf der Unterseite der Motorhaube 4 ist ein zangenförmiges Dichtungsband 6 umlaufend befestigt, das mit einem komplementären Hohlprofil 7 auf der Kapselwandung 5 in Eingriff gebracht werden kann.

Liste der Bezugszeichen:
- 1: Dichtungsanordnung
- 2: Motorraum
- 3: Fahrzeug
- 4: Motorhaube
- 5: Kapselwandung
- 6: zangenförmiges Dichtungsband
- 6a: Schenkel
- 6b: Basis
- 7: Hohlprofil
- 8: Brennkraftmaschine
- 9: Längsträger

## Patentansprüche

1. Dichtungsanordnung (1) für einen gekapselten Motorraum (2) eines Fahrzeugs (3), aufweisend eine zwischen einer Geschlossenstellung und einer Offenstellung verschwenkbare Motorhaube (4) mit einer unterseitig montierten Dichtungsanordnung (1) zur dichtenden Auflage auf mindestens einer Kapselwandung (5), **dadurch gekennzeichnet, dass** die Dichtungsanordnung (1) zweiteilig mit einem zangenförmigen Dichtungsband (6) und einem Hohlprofil (7) ausgebildet ist, wobei das zangenförmige Dichtungsband (6) das Hohlprofil (7) in der Geschlossenstellung zumindest teilweise umklammert.

2. Dichtungsanordnung (1) nach Anspruch 1, **dadurch gekennzeichnet, dass** die Dichtungsanordnung (1) umlaufend angeordnet ist.

3. Dichtungsanordnung (1) nach Anspruch 1 oder 2, **dadurch gekennzeichnet, dass** die Dichtungsanordnung (1) stoffschlüssig befestigt ist.

4. Dichtungsanordnung (1) nach einem der Ansprüche 1 bis 3, **dadurch gekennzeichnet, dass** das zangenförmige Dichtungsband (6) an der Motorhaube (4) und das Hohlprofil (7) auf der Kapselwandung (5) befestigt ist.

5. Dichtungsanordnung (1) nach einem der Ansprüche 1 bis 4, **dadurch gekennzeichnet, dass** die Kapselwandung (5) eine Brennkraftmaschine (8) kastenförmig umschließt.

6. Fahrzeug (3), aufweisend eine Dichtungsanordnung (1) nach Anspruch 1.
